# EUROPEAN PATENT APPLICATION

(11) **EP 1 044 797 A1**
(43) Date of publication of application: **18.10.2000**
(21) Application number: 99201143.7
(22) Date of filing: 13.04.1999
(51) Int. Cl.: B32B 7/12, E04F 13/14, E04F 15/08

(54) **Method for mounting ceramic tiles by means of an acrylic foam pressure sensitive adhesive**

(71) Applicant: 3M Innovative Properties Company, St. Paul, Minnesota 55133-3427 (US)
(72) Inventor: Kreckel, Karl W., 3M Laboratories (Europe) GmbH, 41453 Neuss (DE); Breker, Dirk, 3M Laboratories (Europe) GmbH, 41453 Neuss (DE)
(74) Representative: Voortmans, Gilbert J.L.

(57) **Abstract**

The present invention discloses a method of mounting ceramic tiles on a substrate comprising the steps of:
(a) providing a release layer on said substrate;
(b) providing a ceramic tile having a first major side intended to remain visible after said mounting and a second major side opposite to said first major surface;
(c) adhering the ceramic tile with said second major side to said release layer on said substrate;
wherein the adhesion of the ceramic tile to the release layer on said substrate is effected by a pressure sensitive adhesive layer comprising an acrylic foam or by a layer assembly of a layer comprising an acrylic foam and a pressure sensitive adhesive layer.

Further disclosed are ceramic tiles having on their rear surface an adhesive layer or layer assembly having acrylic foam layer. Ceramic tiles mounted according to the invention are firmly mounted yet can be cleanly removed if there is a desire to replace the tiles.

## Description

### 1. Field of the invention

The present invention relates to a method for mounting ceramic tiles on a substrate such as a floor or a wall using a pressure sensitive adhesive. In particular, the present invention relates to a method of mounting ceramic tiles that allows for easy and clean removal of ceramic tiles when it is desired to replace the ceramic tiles. The invention further relates to a ceramic tile having on its rear surface a layer of pressure sensitive adhesive.

### 2. Background of the invention.

The most commonly used method for mounting ceramic tiles to a floor or a wall is to provide cement or another fixative to the wall or floor and to place the ceramic tiles therein. Although this method has proven to be effective to mount ceramic tiles, it has the disadvantage that the fixative contains large amounts of water which after the mounting needs to dry out, it usually requires a skilled artisan to place the ceramic tiles and the tiles cannot be removed without causing damage to the tiles and/or floor. As a result, it is expensive and cumbersome to replace the ceramic tiles. Also, this method is not suitable for mounting ceramic tiles on display boards that are often used to show potential customers a sample of a surface covered with particular ceramic tiles.

The art has therefore sought to replace the fixative with an adhesive. For example, it has been proposed to coat the wall or floor with an adhesive coating. However, this method is still cumbersome and requires skilled operation particularly on vertical surfaces. Accordingly, self-adhesive ceramic tiles have been proposed that contain a layer of adhesive on the rear side. For example, US 3,962,504 disclose a ceramic tile that has on its rear surface a plurality of bodies of pressure sensitive adhesive that has a thickness of 0.75mm to 1mm. It is taught that this thickness is required to compensate for irregularities of the wall surface and back surface of the tile. As a pressure sensitive adhesive, there is proposed a rubber based adhesive.

However, the method and tiles described in the aforementioned US-patent has the disadvantage that the ceramic tiles cannot easily be removed without causing damage to the wall or floor surface. In particular, the floor or wall surface is often provided with a thin layer of mortar or plaster to even out the floor or wall. This thin layer or subfloor may easily be damaged in particular if strong adhesives such as those described in the aforementioned US-patent are used.

Similarly, ZA 7307948 disclose ceramic tiles that have several strips or dots of a film or foam of pressure sensitive adhesive on the rear side. As an example of the pressure sensitive adhesive foam, there is mentioned Scotchmount™ 4008 double coated adhesive tape. This is tape that has a polyurethane foam backing that is provided with a high tack acrylic adhesive. When used for mounting ceramic tiles to walls as described in this South African patent application, the tiles may be firmly adhered but subsequent removal of the tiles may result in cohesive failure in the polyurethane foam backing and/or damage to the wall surface. As a consequence, the method in ZA 7307948 is believed not to allow for easy removal and replacement of ceramic tiles.

JP 53-19639 describes a method for placing floor materials such as carpet tiles on a floor by first coating the floor with a resin and subsequently adhering the floor material with an adhesive such as a double coated adhesive to the floor coated with the resin. It is taught that the floor material can be replaced without damage to the floor and floor material. However, the method disclosed in this Japanese application although being effective for floors, would not be suitable for use on walls because in the latter instance a generally stronger bond between the tile and the wall is required than is required on a floor. As a consequence, the adhesives disclosed in JP 53-19639 would be expected to fail when used in a wall application.

Accordingly, the art has still not solved the problem of providing a method of ceramic tile mounting that allows for the tiles to be firmly mounted on vertical and horizontal surfaces in a way that they can be easily replaced without causing damage to the floor / wall or the tile.

### 3. Summary of the invention.

The present invention provides a method of mounting ceramic tiles on a substrate comprising the steps of:
(a) providing a release layer on said substrate;
(b) providing a ceramic tile having a first major side intended to remain visible after said mounting and a second major side opposite to said first major surface;
(c) adhering the ceramic tile with said second major side to said release layer on said substrate;
wherein the adhesion of the ceramic tile to the release layer on said substrate is effected by a pressure sensitive adhesive layer comprising an acrylic foam or by a layer assembly of a layer comprising an acrylic foam and a pressure sensitive adhesive layer.

Ceramic tiles mounted in connection with the method of this invention can be firmly adhered to both vertical as well as horizontal surfaces. Yet the ceramic tiles can be cleanly and easily replaced when desired without causing damage to the tiles or the substrate. Furthermore, the adhesion of the ceramic tiles to the substrate remains good over a broad temperature range therefore allowing the use of this method of tile mounting in a variety of applications including applications where tiles are exposed to a very low temperature as well as in applications where the tiles would be exposed to high temperatures.

The present invention further provides a ceramic tile having a first major side intended to remain visible after mounting of the ceramic tile and a second major side opposite to said first major side, said second major side comprising a pressure sensitive adhesive layer comprising an acrylic foam or a layer assembly of a layer comprising an acrylic foam and a pressure sensitive adhesive layer.

The invention also provides a substrate which is at least partially covered with ceramic tiles, said substrate comprising a release layer to which ceramic tiles are adhered with (i) a pressure sensitive adhesive layer comprising an acrylic foam or with (ii) a layer assembly of a layer comprising an acrylic foam and a pressure sensitive adhesive layer.

### 4. Detailed description of the invention.

The method of the present invention allows for mounting of ceramic tiles on a substrate irrespective of whether the substrate is horizontal, vertical or has an orientation in between. The substrate to which the ceramic tiles are mounted is not particularly limited but is generally a floor or a wall. In particular, the ceramic tiles can be mounted to floors or walls that have a thin layer of plaster or mortar to even out the surface of the floor or wall. In connection with another embodiment of this invention, the substrate may be a display board for displaying samples of ceramic tiles.

In accordance with the method of this invention, the substrate to which the ceramic tiles are to be mounted is provided with a release layer. This release layer protects the substrate against damage when the tiles are being removed. The release layer further provides a surface with known release characteristics so that the strength of the bond between the ceramic tile and the substrate can be tailored as desired independent of the particular nature of the substrate. The tailored bond should have sufficient bonding strength for the particular application while on the other hand the bonding strength may not be too large so that the tiles can no longer be readily replaced.

The release layer can be provided by adhering it to the substrate through the use of an adhesive. Thus, to provide a release layer, a polymeric film backing of an adhesive tape, in particular a pressure sensitive adhesive tape, may be used. The polymeric film backing of the adhesive tape may further have on the major surface opposite to the major surface having the adhesive, a release material, to tailor the strength by which the tile is bonded to the substrate. Such release material may be any of the known materials used for their release properties for adhesives and is preferably a silicone release material such as silicones and modified silicones, the modification including both copolymerization of silicones with other nonrelease chemical agents or by adding nonsilicone materials to the silicone release coating solution. Silicone release coatings are described in Chapter 24, pp. 601 - 626, from HANDBOOK OF PRESSURE-SENSITIVE ADHESIVE (Second Edition, 1989, D. Satas, ed., Van Nostrand Rheinhold.

Further examples of release materials that can be provided to the polymeric film include waxes, long chain branched polymers, fluorocarbons, the Werner-type chromium complexes, and polyvinyl carbamates, as described in the Chapter 23 "Release Coatings", pp. 585 - 600, from HANDBOOK OF PRESSURE-SENSITIVE ADHESIVE (Second Edition, 1989, D. Satas, ed., Van Nostrand Rheinhold.

Release materials may be applied from solution or as 100% solids coatings and can be optionally radiation cured. They may be applied in a continuous manner or in a pattern of stripes of discontinuous spots.

Examples of polymeric film backings that can be used include, polyester film, polyethylene and polypropylene films. In case the surface of the polymeric film itself already has the desired release characteristics, it will not be necessary to provide that surface with a release material. For example, a low density polyethylene film may already have the desired release characteristics without the aid of a release coating as described above. Further, the desired release characteristics can also be introduced to a polymeric film which ordinarily has limited release characteristics by embossing the film.

Commercially available adhesive tapes that can be used to provide a release layer on a substrate include thin, single sided pressure-sensitive adhesive tapes based on polymeric film backings, including those adhesive tapes commonly used as box-sealing tapes, such as Scotch™ Tape # 371 (thickness 48 microns) , Tartan ™ Tape # 369 (thickness 43 microns), Scotch ™ Tape # 370 (thickness 48 microns) , Scotch ™ Tape # 375 (thickness 75 microns), Scotch ™ Tape # 3739 (thickness 56 microns) and Scotch ™ Tape # 351 (total thickness 70 microns). All single-sided pressure-sensitive tape described above are available from 3M Company, St. Paul, MN/USA.

When the release layer is provided from an adhesive tape as described above, it is preferred that the adhesive of such an adhesive tape provides for a strong bond between the release layer and the substrate.

This bond strength should be larger than the strength of the bond between the release layer and the tiles so as to avoid removal of the release layer off the substrate upon removal of the tiles, which may damage the substrate.

Preferably the bond strength between the release layer and the substrate is at least 1.5 and more preferably at least 2 times the bond strength between the tile and the release layer. It is thus preferred that the adhesive tape providing the release layer has an aggressive acrylic or rubber/resin based pressure-sensitive adhesive system to assure firm anchorage of the single-sided adhesive tape to the substrate.

Instead of providing the release layer through an adhesive tape as described above, it is also possible to directly coat or paint the release layer on the substrate. Suitable release materials that can be coated or painted are those mentioned above.

An essential feature of the present invention is the use of an acrylic foam to adhere the ceramic tiles to the substrate. By the term "acrylic foam" in connection with the present invention is meant a material that is based on a polymer of an alkyl ester of acrylic or methacrylic acid and which material contains voids typically in an amount of at least 5 % by volume, preferably 10 - 30 % . The voids may be obtained by any of the known methods such as cells formed by gas or the voids may result from the incorporation of hollow fillers such as hollow polymeric particles or hollow glass or hollow ceramic microspheres.

The acrylic foam may comprise a single pressure sensitive adhesive layer (so called self-stick foams) or alternatively, a layer containing acrylic foam may be provided with one or more thin pressure sensitive adhesive layers on its surfaces. It was found that through the use of an acrylic foam, a strong bond between the ceramic tile and the substrate can be formed so that ceramic tiles can be mounted even to vertical surfaces. Furthermore, as a result of the use of the acrylic foam and despite the strong bond necessary in wall applications, the ceramic tiles can still be cleanly and easily removed from the substrate which therefore allows for replacement of the tiles.

As set forth above, the acrylic foam used in this invention is based on a polymer of an alkyl ester of acrylic or methacrylic acid (hereinafter referred to as "acrylic polymer"). Preferably, the acrylic polymer is a polymer of 50 to 100 parts by weight of substituted or unsubstituted alkyl acrylate or alkyl methacrylate monomers whose homopolymers exhibit a glass transition temperature of 0°C or less (collectively referred to hereinafter as "acrylate monomer") and 0 to 50 parts by weight of copolymerizable reinforcing monoethylenically unsaturated monomer, whose hompolymer preferably exhibits a glass transition temperature of 10°C or greater. Examples of this type of polymer are disclosed in US Pat. No. Re. 24,906 (Ulrich) and include copolymers of 88-99 parts by weight of alkyl acrylate having an average of 4-12 carbon atoms (herein referred to as "C₄₋₁₂") in the alkyl groups and 12 to 1 parts by weight of at least one of acrylic acid, methacrylic acid, itaconic acid, acrylamide and methacrylamide. Other useful reinforcing monoethylenically-unsaturated monomers which are copolymerizable with acrylate monomer include N-substituted acrylamides, acrylonitrile, methacrylonitrile, hydroxyalkyl acrylates, cyanoethyl acrylate, maleic anhydride, and N-vinyl-2-pyrrolidone, all of which result in pressure-sensitive adhesives which are tacky at ordinary room temperature when used with C₄₋₁₂ alkyl acrylate in amounts up to about 12 mol percent of the acrylate monomer, or up to about 50 mol percent when the copolymerizable monomer is mainly N-vinylpyrrolidone. Other copolymerizable monomers that can be useful include alkyl vinyl ethers, vinylidene chloride, styrene, and vinyltoluene.

The acrylic foam used in the invention need not be tacky and accordingly the alkyl acrylate may have an average of only 1-3 carbon atoms, and the acrylic acid and other copolymerizable monomers may be used at far larger proportions. If such an acrylic foam is used in this invention, it is laminated to or coated with a relatively thin pressure-sensitive adhesive layer to provide a pressure sensitive adhesive layer assembly. Preferably, such a thin pressure sensitive adhesive layer comprises an acrylic polymer such as for example a polymer as described in US. Pat. No. Re. 24,906. The thin pressure sensitive adhesive layer may be provided on one major side of the acrylic foam layer but is preferably provided on both major sides of the acrylic foam layer.

The layer containing the acrylic foam preferably has a thickness between 150 microns and 2000 microns and more preferably between 200 microns and 1500 microns. In particular when tiles are being mounted on a vertical surface or generally vertical surface, the thickness of the acrylic foam layer should not be less than 350 microns and is preferably at least 500 microns and most preferably between 800 microns and 1500 microns. On the other hand, for applications to floors, the acrylic foam layer is preferably not too thick and is preferably between 200 microns and 500 microns.

The acrylic foam preferably has a density between 0.70 and 0.95. This density is achieved by including voids or cells. Typically, the acrylic foam will comprise at least 5% of voids and preferably between 20 and 30 % of voids on a volume basis.

The voids or cells in the acrylic foam can be created in any of the known manners described in the art and include the use of a gas or blowing agent and/or including hollow particles into the composition for the acrylic foam layer. For example, according to one method to create an acrylic foam described in US 4,415,615, the acrylic foam can be obtained by the steps of (i) frothing a composition containing the acrylate monomers and optional comonomers, (ii) coating the froth on a backing and (iii) polymerizing the frothed composition. It is also possible to coat the unfrothed composition of the acrylate monomers and optional comonomers to the backing and to then simultaneously foam and polymerize that composition. Frothing of the composition may be accomplished by whipping a gas into the polymerizable composition. Preferred gasses for this purpose are inert gasses such as nitrogen and carbon dioxide, particularly if the polymerization is photoinitiated.

If the viscosity of a mixture of polymerizable monomers is too low to provide a coatable froth, the monomers may be partially polymerized prior to frothing to provide a composition having a viscosity in the range of about 1000 to 40,000 cps, conveniently by mixing a photoactive polymerization initiator with the monomers and exposing the mixture to ultraviolet radiation. Viscosities above 5000 cps tend to provide better cell uniformity, whereas viscosities below 15,000 cps are preferred for ease of handling. Instead of employing ultraviolet radiation, a heat-activatable polymerization initiator may be mixed with the monomers to provide a mixture which can be partially polymerized by heat to the desired viscosity prior to frothing. A third technique which has been successful is to mix the monomers with a thixotropic agent such as fumed silica, carrying out the entire polymerization in a single in situ step after coating.

If the monomer mixture has been photopolymerized to provide a froth of coatable viscosity, it may contain sufficient residual initiator to allow the coated froth to be fully polymerized under ultraviolet radiation. However, it is usually desirable to add further photoinitiator which may also be capable of crosslinking the polymer. If the monomers are partially polymerized thermally and the polymerization is to be completed in situ by heat, it is usually necessary to add additional heat-activatable polymerization initiator to the partially polymerized composition.

To increase the cohesive strength of the acrylic foam, the polymerizable composition preferably includes a cross-linking agent. Useful crosslinking agents which also function as photopolymerization initiators are disclosed in U.S. Pat. Nos. 4,330,590 (Vesley) and 4,329,384 (Vesley, Moon). Other suitable crosslinking agents include polyacrylicfunctional monomers such a trimethylolpropane triacrylate and 1,2-ethylene glycol diacrylate.

Alternatively, an acrylic foam may be obtained by including hollow particles i.e., hollow microspheres into a polymerizable composition for making the acrylic polymer. Examples of hollow microspheres include expanded or expandable thermoplastic polymer microspheres and glass microbubbles. Examples of expanded or expandable thermoplastic polymer microspheres are disclosed in US Patent No. 4,855,170 and include the commercially available hollow polymeric microspheres from Pierce & Stevens Company under the tradename MICROLITE™ and MIRALITE™. Further commercially available expanded or expandable polymeric microspheres include EXPANCEL™ (Kema Nord Plastics) and MICROPEARL™ (Matsomoto Yushi Seiyaku). The hollow thermoplastic polymer microspheres typically have an average diameter of 5 to 150 microns, preferably 10 to 100 microns.

Suitable glass microbubbles preferably have an average diameter of 10-200 micrometers. Microbubbles of smaller average diameter would tend to be unduly expensive, whereas it would be difficult to coat out a polymerizable mixture containing microbubbles of larger average diameter. Preferably the average diameter of the microbubbles is within the range of 20 to 80 micrometers. The glass microbubbles typically have a specific gravity of less than 1.

Acrylic foam layers having glass microbubbles are particularly preferred for floor mounting applications as they will likely be less compressible than acrylic foams where voids are introduced in a different way.

The acrylic foam layer may contain further additives such as dyes, pigments, fumed silica, chopped fibers, organic and inorganic fillers, catalysts and cross-linking agents to achieve specific effects.

In accordance with the method of the invention, the ceramic tiles are adhered to a substrate that has been provided with a release layer. Adhesion is accomplished by a pressure sensitive adhesive layer comprising the acrylic foam or a layer assembly of a layer comprising the acrylic foam and a pressure sensitive adhesive layer. In accordance with one particular embodiment, the pressure sensitive adhesive layer or the layer assembly may first be adhered to the rear surface of the ceramic tile, i.e. the major surface of the tile that is opposite to the major surface that is intended to remain visible. The rear surface of the ceramic tile may be smooth but will generally be a profiled surface making the ceramic tile also suitable for mounting by the conventional techniques using mortar or an other fixative. The pressure sensitive adhesive layer or the layer assembly may be provided over the complete rear surface of the ceramic tile. Preferably however, the pressure sensitive adhesive layer or the layer assembly are provided as stripes or spots on the rear surface of the ceramic tiles, for example at the corners and/or along one or more edges of the ceramic tile.

The pressure sensitive adhesive layer or the layer assembly is preferably provided as a double-sided adhesive tape, i.e. the pressure sensitive adhesive layer or the layer assembly are protected at their major surfaces with a release liner. Commercially available double-sided adhesive tapes suitable for practising the present invention include 3M VHB+ Tape # 4941 (thickness 1.1 mm), 3M VHB+ Tape 4936 (thickness 0.6 mm), 3M VHB Tape # 4950 (thickness 1.1 mm), 3M VHB Tape # 4930 (thickness 0.6 mm), 3M VHB Tape # 4951 (thickness 1.1 mm), 3M VHB Tape # 4929 (thickness 0.6 mm), 3M VHB Tape # 4949 (thickness 1.1 mm), 3M VHB Tape # 4910 (thickness 1.0 mm), 3M VHB Tape # 4945 (thickness 1.1 mm), 3M VHB Tape # 4943 (thickness 1.1 mm), 3M VHB Tape # 5360 (thickness 0.4 mm), 3M Acrylic Foam Tape # 4611 (thickness 0.8 mm), 3M Acrylic Foam Tape # 4655 (thickness 1.5 mm) and 3M Acrylic Foam Tape # 4646 (thickness 0.6 mm). All of the double-sided adhesive tapes described are available from 3M Company, St. Paul, MN/USA

To adhere the adhesive tape to the rear surface of a ceramic tile, the release liner on one major surface is removed to expose the pressure sensitive adhesive on that side and the adhesive tape is then firmly pressed against the rear surface of the tile. Subsequently the release liner protecting the other major surface is removed and the ceramic tile can then be placed on the substrate with gentle pressure so that repositioning of the tile can still be done. Applying firm pressure to the ceramic tile will create a strong bond between the tile and the substrate. However, the tile can still be cleanly removed by forcing for example a screw driver or similar device between the tile and the substrate.

Alternatively, the pressure sensitive adhesive layer or the layer assembly may be provided on a backing, i.e. as a simple pressure sensitive adhesive tape. In this case, the pressure sensitive adhesive layer or the layer assembly can be adhered to the rear surface of a ceramic tile through an intermediate double coated tape adhering the backing of the adhesive tape to the ceramic tile.

While it is preferred to first adhere the pressure sensitive adhesive layer or the layer assembly to the ceramic tile, it is also possible to first adhere the pressure sensitive adhesive layer or the layer assembly to the release layer on the substrate.

The ceramic tiles may be mounted in any particular configuration and can be mounted to the substrate leaving a small spacing between the ceramic tiles. This spacing may subsequently be filled with grout as is conventionally done when tiles have been mounted using mortar. The grout will normally not prevent subsequent removal and replacement of the ceramic tiles.

The following examples are intended to further illustrate the invention without however the intention to limit the invention thereto.

### EXAMPLES

### Test Methods

### Static Shear

Static shear performance of the adhesive bond was measured according to AFERA 4012.

The reverse surface of a ceramic test tile having a size of ca. 100 mm x 50 mm, available as Article # 3333 (FE 18 / 45D) from Villeroy and Boch, Metlach, Germany, was used as a substrate for the evaluation of static shear behavior of several double-sided adhesive tapes.

First, the exposed adhesive face of an adhesive tape sample having a surface area of 25.4 mm x 12.7 mm was applied with hand pressure to a stainless steel plate having the dimensions of 50 mm x 25 mm. The steel plate was placed in a manner such that it covered the adhesive face and extended in one direction past the adhesive for about 2.5 cm. The steel plate was provided with a hole to facilitate hanging of a weight in a vertical fashion.

Then the tape/steel plate assembly was adhered to the back of the ceramic tile substrate. The tape/plate was then rolled down onto the surface of the ceramic tile using a roller having a weight of 6.8 kg, two times in each direction.

After a dwell time of twenty minutes at 23°C and a relative humidity of 50%, a 1 kg weight was suspended from the test assembly. The time required for bond failure was recorded in minutes. Three samples were evaluated and the average time to failure then reported.

### Example 1

A 1 cm thick piece of pressboard having a surface area of 1 m² was covered on one of its major surfaces with pressure sensitive adhesive tape available as 3M Tape # 371 from 3M Company, St. Paul, MN/USA. The adhesive tape comprised a rubber/resin based pressure-sensitive adhesive coated on polypropylene film. The side of the adhesive tape bearing no adhesive bore a thin coating of silicone-based release material. The adhesive surface of the tape was placed against the pressboard surface and rolled down with a rubber-coated roller.

Ceramic tiles, available as Junior Collection from Villeroy and Boch GmbH, Mettlach, Germany, were then adhered to the tape-coated pressboard surface using strips of 2.54 cm wide, 1.1 mm thick double-sided adhesive tape, available as VHB⁺ (TM) Tape # 4943 from 3M Company. One strip of tape having the dimensions 10.2 cm X 2.54 cm was placed on the reverse side of the ceramic tile (33 cm x 33 cm) near each of the four corners of the tile. The ceramic tile, bearing the four pieces of VHB⁺ (TM) adhesive tape, was then pressed onto the packaging tape-coated pressboard by hand.

After a dwell time of 72 hrs, the tile was removed from the surface by inserting a screwdriver under the edge of the tile and prying it away from the tape-coated pressboard surface. The surface of the pressboard was not damaged and the ceramic tile was not damaged. The adhesive bond broke between the release coating of the packaging tape and the acrylic foam adhesive tape, leaving the acrylic foam adhesive tape adhered to the reverse side of the ceramic tile.

Tape # 4943 was evaluated according to the static shear test method described above. Each of the samples held for over 10,000 minutes and the test was discontinued.

### Example 2

Example 1 was repeated with the exception that the pressboard was not entirely covered with adhesive tape as described above. Adhesive tape # 371 from 3M was applied to the pressboard in stripes laid in a parallel fashion so that the neighbouring tape edges were separated by about 17 cm. The tape was adhered to the pressboard surface in such a manner that it was in the correct position for serving as a release surface for the VHB⁺ (TM) acrylic foam adhesive tape.

A ceramic tile was bonded to the tape-coated pressboard by applying VHB⁺ tape at the comers of each ceramic tile as in Example 1.

The ceramic tiles could be removed by prying off with a screwdriver. Neither the pressboard surface or the ceramic tile were permanently damaged.

### Example 3

A piece of pressboard painted on one side with a waterbased, UV-curable acrylic paint as the release layer and having a size of 1 m x 1 m x 1 cm (obtainable from Homanit GmbH, Herzberg am Harz, Germany) was employed as a subtrate for mounting ceramic tiles.

A ceramic tile bearing four pieces of VHB⁺ (TM) # 4943 Tape, prepared as in Example 1, was pressed onto the painted surface of the pressboard by hand pressure.

After 72 hrs, the ceramic tile was removed from the pressboard by inserting a screwdriver or a small lever tool designed for this purpose under one edge and prying the tile from the surface. The painted surface was not damaged and the tile was not damaged. The VHB⁺ (TM) adhesive tape # 4943 remained on the backside of the ceramic tile.

### Example 4

A smooth concrete floor surface was prepared by first sweeping it free of loose debris. Strips of adhesive tape (3M Packaging Tape # 371 from 3M Company, St. Paul, MN/USA) were then adhered to the cleaned floor. The strips were 2.54 cm wide and were applied in roughly parallel fashion so that a space of approximately 17 cm remained between the tape edges of neighboring strips.

Ceramic tiles were prepared as in Example 1 by placing sections of VHB (TM) Tape # 5360 at each of the corners of the tile. The VHB Tape # 5360 employed was VHB Tape # 5360 from 3M Company, St. Paul, MN/USA having a thickness of 0.4 mm. The ceramic tiles were then attached to the taped floor in a regular geometrical matrix, leaving 0.5 cm between the tile edges of each the ceramic tiles. The tiles were then pressed onto the floor by stepping on them. The spaces between the tiles was filled with "Flexfuge, grau" from Ato Findley Deutschland GmbH (Offenbach, Germany) and allowed to dry under ambient conditions.

After 1 month, a screwdriver was used to removed the grout from between two tiles. The screwdriver was then placed under the edge of a tile adjacent to the grout-free joint and pried from the floor. The other tiles were then removed similarly. The floor was not damaged and no residues remained on it. The ceramic tiles were also not damaged.

The floor, still bearing the strips of adhesive tape, was swept free of grout debris and new ceramic tiles were adhered to it using the same method just described.

Tape # 5360 was also evaluated by the static shear test method given above. The test gave an average value of 4 minutes. Although this renders the tape less suitable for use in a wall application, the tape still provides for the other beneficial properties in floor applications such as clean removal allowing replacement of the tile. In floor application the shear holding requirements are not relevant.

### Example 5

Example 4 was repeated with the exception that the entire surface of the concrete floor was covered with adhesive tape strips. The strips were laid in roughly parallel fashion in a manner so that the strips of tape butted against each other at their edges or overlapped slightly.

### Example 6

A plastered wall surface was brushed clean and covered with strips of adhesive tape as in Example 1 . Ceramic tiles were prepared for mounting by placing three strips of VHB⁺ (TM) Tape # 4945 (available from 3M Company, St. Paul, MN/USA) on the reverse side of the tile. VHB⁺ (TM) Tape # 4945 has a thickness of 1.1 mm. The three strips were placed in parallel fashion: one strip near each of two opposing edges and one strip roughly centred between the other two strips.

The tile bearing the strips of VHB⁺ was then pressed onto the prepared wall surface by hand.

Tape # 4945 was evaluated by the static shear test method given above. All three test samples did not show failure within 10,000 minutes and the test was discontinued.

### Comparative Example 1

Example 1 was repeated with the exception that a foam-based adhesive tape comprising a polyethylene foam bearing a thin coating of acrylic PSA on each side (available as Tape # 9528 from 3M Company, St. Paul, MN/USA) was employed to mount the ceramic tiles.

On attempts to forcefully separate the ceramic tile from the mounting surface using a screwdriver, the adhesive tape split cohesively in the foam layer, leaving adhesive/foam residues on both the mounting surface and the reverse side of the ceramic tile.

### Comparative Example 2

Example 1 was repeated with the exception that the VHB⁺ (TM) acrylic foam was replaced with a polyurethane foam tape available as # 4032 from 3M Company, St. Paul, MN/USA. On attempts to remove the ceramic tile from the surface, the tape split and exhibited cohesive failure, leaving adhesive and foam residues on both surfaces.

### Comparative Example 3

Example 3, describing tile mounting on a wall, was repeated with the exception that a double-coated adhesive tape comprising a polymeric film backing coated on both sides with acrylic PSA (available as Tape # 410 from 3M Company, St. Paul, MN/USA) was employed to mount the tiles. Tape # 410 had an overall thickness of 0.13 mm.

The ceramic tile separated from the wall under its own weight after a period of 10 minutes. Tape # 410 was evaluated according to the static shear test method given above. The average holding time for the three samples was 25 minutes.

Tape # 410 is also less suitable for use in mounting tiles to a floor, in particular with the tiles of this examples which have a profile on their rear side. When this tape is used to mount tiles on a floor, some tiles may move when walked over causing the grout between the tiles to loosen.

## Claims

1. A method of mounting ceramic tiles on a substrate comprising the steps of:
(a) providing a release layer on said substrate;
(b) providing a ceramic tile having a first major side intended to remain visible after said mounting and a second major side opposite to said first major surface;
(c) adhering the ceramic tile with said second major side to said release layer on said substrate;
wherein the adhesion of the ceramic tile to the release layer on said substrate is effected by a pressure sensitive adhesive layer comprising an acrylic foam or by a layer assembly of a layer comprising an acrylic foam and a pressure sensitive adhesive layer.

2. A method according to claim 1 wherein said adhesive layer comprising an acrylic foam or said layer assembly is provided at the comers of the ceramic tile.

3. A method according to claim 1 wherein said adhesive layer comprising said acrylic foam or said layer of said layer assembly comprising acrylic foam has a thickness between 50 microns and 2000 microns.

4. A method according to claim 1 wherein said acrylic foam is based on a polymer of an alkyl ester of acrylic or methacrylic acid and acrylic or methacrylic acid and wherein said acrylic foam comprises at least 5 % by volume of voids.

5. A method according to claim 4 wherein said acrylic foam comprises a hollow organic or inorganic filler.

6. A method according to claim 5 wherein said acrylic foam comprises a hollow glass microspheres or a hollow polymer particle.

7. A method according to claim 1 wherein said substrate comprises a floor, a wall or a display board.

8. A method according to claim 1 wherein said release layer is provided on said substrate by coating a release coating thereon.

9. A method according to claim 1 wherein said release layer is provided on said substrate by adhering the release layer on said substrate with an adhesive layer.

10. A ceramic tile having a first major side intended to remain visible after mounting of the ceramic tile and a second major side opposite to said first major side, said second major side comprising a pressure sensitive adhesive layer comprising an acrylic foam or a layer assembly of a layer comprising an acrylic foam and a pressure sensitive adhesive layer.

11. A ceramic tile according to claim 10 wherein said adhesive layer comprising an acrylic foam or said layer assembly are provided at the corners of the ceramic tile.

12. A ceramic tile according to claim 10 wherein said adhesive layer comprising said acrylic foam of said layer of said layer assembly comprising acrylic foam has a thickness between 50 microns and 2000 microns.

13. A ceramic tile according to claim 10 wherein said acrylic foam is based on a polymer of an alkyl ester of acrylic or methacrylic acid and and acrylic or methacrylic acid and wherein said acrylic foam comprises at least 5 % by volume of voids.

14. A ceramic tile according to claim 13 wherein said acrylic foam comprises a hollow organic of inorganic filler.

15. A ceramic tile according to claim 10 wherein said second major side has a profiled surface.

16. A substrate which is at least partially covered with ceramic tiles, said substrate comprising a release layer to which ceramic tiles are adhered with (i) a pressure sensitive adhesive layer comprising an acrylic foam or with (ii) a layer assembly of a layer comprising an acrylic foam and a pressure sensitive adhesive layer.

17. A substrate according to claim 16 wherein said ceramic tiles are arranged next to each other with a spacing between them filled with grout.

18. A substrate according to claim 16 or 17 wherein said substrate is a wall, a floor or a display board.
